# EUROPEAN PATENT APPLICATION

(11) **EP 3 579 157 A1**
(43) Date of publication of application: **11.12.2019**
(21) Application number: 18382395.4
(22) Date of filing: 05.06.2018
(51) Int. Cl.: G06Q 10/00, G06Q 50/28

(54) **RECYCLING MANAGEMENT SYSTEM AND METHOD**

(71) Applicant: Sira Martinez, Enrique, 28770 Madrid (ES)
(72) Inventor: SIRA MARTINEZ, Enrique, 28770 Madrid (ES); PÉREZ LLEBOT, Daniel Eduardo, 28017 Madrid (ES); MUÑOZ RODRÍGUEZ, Michel, Av. Blasco Ibáñ Rocafort (ES); TROYA VIDAL, Alejandro Miguel, 46018 Valencia (ES)
(74) Representative: Isern-Jara, Nuria

(57) **Abstract**

The present invention is based on a recycling management system for products and/or packages comprising:
- electronic tags configured to be fixed to said products or packages, each electronic tag provided with electronic data, said data being at least an unequivocal electronic identifier of the single product or package,
- tag readers enabled to be located at products' distribution facilities, waste containers, means of transportation and/or waste sorting stations, and being configured to detect each electronic tag that reaches a predetermined distance respect to any of said tag readers, as well as to unequivocally read their electronic data with no need of direct line of sight communication, and transmit it to sorting means or to a server system.

## Description

### Field of the invention

The present invention relates to a recycling management system for products and/or packages as well as to a recycling management method for products and/or packages.

The field of the invention is the recycling sector and, more specifically, any of the main stages in the recycling process, such as packaging waste tracking, collection, sorting and recycling.

### Background art

Today's economic system is based on a development model in which earth's natural and mineral resources are exploited to generate feedstocks and raw materials, which are then further processed into finished goods, after very large and complex transformation and logistics chains.

Through this process, growing amounts of materials, energy, contaminants and products in general, are discarded regardless of their environmental impact. As a consequence, growing amounts of waste are inadequately 'thrown away' ending up, in landfills, incinerators or rivers and oceans. This makes waste management one of the most critical issues in modern society.

Packaging waste is an important and rapidly growing component in the overall waste management problem. As expected, the amount of packaging tends to grow dramatically with industrialization, level of economic development and population growth. In consequence, product and/or packaging waste has continued to grow while, in general, recycling and diversion rates have shown a tendency to stagnate and lag behind.

Also, hazardous waste adds another important and very sensitive dimension to the problem because of its growing amounts and the potential negative impact to human health and the environment.

Then, re-using and recycling all or nearly all produced products and/or packages, limiting to zero uncontrolled hazardous or highly contaminating waste and properly discarding containers through specialized companies or facilities represent a fundamental objective to ensure a sustainable future.

In order to achieve said objective, waste management industry has developed and grown considerably in the last two decades achieving higher levels of diversion and recycling and improving overall operational efficiency. There are however, signifficant challenges ahead in order to make recycling economically sustainable and cost competitive, especially when compared against the cost of landfill and other less environmentally friendly alternatives.

Many of these challenges relate to much needed improvements in three key areas: i) Improved visibility and ability to track recyclables better ii) Ability to monitor and measure performance and related metrics more effectively so that the processes of collection, sorting and recycling can be managed more effectively and more cheaply iii) Ability to predict, optimize and streamline the process so that it can be cost competitive and improve its efficiency and effectiveness.

As a result, smart waste containers as well as suggested methods for pre-sorting and handling recyclables have been developed.

In this regard, patent EP 2 923 316 discloses a smart waste collection system and method, wherein sensors located on the containers may determine the volume of waste in the corresponding container and transmit said information to the user and to a server system. The system server is also configured to inform the user that collection of the corresponding container is required, and to generate the optimal strategy for waste collection vehicles in order to collect the waste from different containers.

It is clear that said disclosure is not enough to obtain an efficient sorting and recycling of waste as there is no control or knowledge of the type of waste located in the container. The sensors located on the containers may determine the volume of waste but they cannot determine the type of waste (or products or packages) located therein, which is a necessary condition to achieve efficient recycling of the waste.

Also, patent US2014379588A1 discloses a system and a method for waste management, wherein identification of the type of waste is carried out by image recognition techniques applied to images obtained from the waste containers.

It is clear that said sorting is not totally accurate as it is based on image recognition techniques which do not allow to identify without error each product discarded in the container. Then, it is normal that said system and method does not precisely identify a type of waste dumped in the container or that it confuses them.

Moreover, said system and method do not allow the user to obtain waste information in real time as image processing requires time to run the corresponding processing, irrespective of the high costs incurred by the user in order to deploy hardware and software able to capture and process the quantities of data needed for image processing. Therefore, said system and method as they are not completely accurate and reliable, cannot be used in order to issue a certificate of correct handling and regulatory compliance for each product or package item through the recycling system.

In this regard, attention should be drawn to the fact that correct sorting of waste is the primary factor for optimal recycling of materials, so there is a critical need to determine efficiently and accurately the type of each product or package received at waste sorting stations or recycling facilities. Another critical factor would be the ability to monitor the products and/or packages through its life cycle, which may comprise several stages, including manufacturing, distribution, discarding, sorting and/or recycling. No document in the prior art discloses a system for determining type or composition of each product or package received at waste sorting stations, neither monitoring the product and/or package since manufacturing to final reception at the recycling facility. At most, in the prior art, products and/or packages are partially monitored only through the disposal stage (when the product and/or package is in the container).

On the other hand, although the prior art introduces the concept of smart waste container, none of the documents of the prior art discloses a complete solution providing enough visibility, tracking capabilities, traceability and decision support system to lower costs and improve efficiency along the entire life cycle of a product and/or packaging, specially, in the sorting stage.

More specifically, no document in prior art discloses the ability to monitor and measure performance and related metrics more effectively so that the processes of collection, sorting and recycling can be managed more effectively and more cheaply nor the ability to predict, optimize and streamline the process so that it can be cost competitive and improve its efficiency and effectiveness through time.

### Description of the invention

The main purpose of the present invention is to provide a system for determining the type of each product or package received at least at the waste collection and sorting stations or recycling facilities, in order to optimally collect, sort and recycle the waste.

Another purpose of the present invention is to monitor individual products and/or packages/containers at different stages of their life cycle, preferably through the whole life cycle (from the moment they are manufactured until they are recycled), providing the user and stakeholders with visibility and traceability needed to measure performance and, specially, effective sorting and recycling of waste.

To do so, the present invention is based on electronic tags (either analogic and/or digital means) configured to be fixed to said products or packages, as well as tag readers located at least at waste collection, sorting and recycling stations and configured for detecting each electronic tag that reaches its vicinity and transmitting its presence to the sorting means or to a server system for the subsequent management,

The products and/or packages may be of any shape as well as size and may contain any substance or element. More specifically, said products and/or packages may be any hazardous or environmentally sensitive products, packages or packaging waste containing substances subject to special regulations. Said products and/or packages are intended to be dispatched from products' distribution facilities, discarded in waste containers and transferred to waste and recycling sorting and recycling stations by means of transportation.

The products' distribution facilities are configured to dispatch the products and/or packages. Preferably products' distribution facilities are warehouses or suitable product storage facilities.

The waste containers are configured to receive the discarded products and/or packages.

The means of transportation are configured to transfer the products and/or packages to waste and recycling sorting stations. Preferably, said means of transportation are fleets of vehicles, as for example: trucks, lorries, etc.

The waste sorting and recycling stations are provided with means which are configured to receive the products and/or packages and sorting them according to given instructions, preferably according to the type of waste generated by said products and/or packages (plastic, organic matter, glass, etc.). In a preferred embodiment, the sorting means may be any programmable logic controller, and/or any processing means capable to receive electronic data by any communication means and/or technology (wire, wireless, Bluetooth, RF signals, etc.).

The electronic tags are configured to be fixed to said products and/or packages by joining or affixing means, preferably, fastening materials (for example: adhesives, glues suitable for this purpose) but also any mechanical means.

Each electronic tag is provided with electronic data, said data being at least an unequivocal electronic identifier of the single product or package on which said electronic tag is fixed.

In a preferred embodiment, the electronic tags are passive RFID tags.

In another preferred embodiment, the electronic tags are RFID tags which are fixed to the products and/or packages as soon as it is possible during the product and/or package manufacturing, or when the package is designed to contain a specific product as soon as the package is filled with the product in the corresponding product manufacturing facility.

Preferably, the unequivocal electronic identifier can identify a batch which contains identical packages but, in the event that the packages contain hazardous materials or environmentally sensitive materials, an unequivocal electronic identifier could identify each package in each batch.

The recycling management system comprises tag readers configured to unequivocally detect each electronic tags' identifier when each electronic tag reaches a predetermined distance respect to the tag reader, as well as to read their electronic data and transmit it to said sorting means. Preferably, tag readers are configured to detect the entry and/or exit of the products and/or packages in and/or out of the products' distribution facilities, waste container, means of transportation and/or waste sorting and/or recycling stations
Said predetermined distance is defined preferably in order to not overlap the scope of range of the tag readers each other. Then, each electronic tag is detected by the nearest tag reader and by no other tag reader.

Optionally, the tag readers are located by any mechanical means on or into the products' distribution facilities (preferably, doorways in warehouses), waste container, means of transportation and/or waste sorting and recycling stations (preferably, receiving docks) in order to be able to detect the entry and/or exit of the electronic tags therein and/or therefrom.

In the preferred embodiment in which the electronic tags are RFID tags, the tag readers are RFID readers.

In the preferred embodiment in which the electronic tags are RFID tags, optionally, products' distribution facilities, waste container, means of transportation and/or waste sorting and recycling stations are equipped with an array of RFID readers which detect the electronic tags of the packages and/or products entry and/or exit therein and/or therefrom, regardless of the fact that the entry and/or the exit of the packages and/or products is one by one or in batches.

Preferably, the tag readers are WIFI enabled in order to transmit the electronic data to the sorting means.

In a preferred embodiment of the recycling management system, the tag readers are enabled to detect said electronic tags and read their data without direct line of sight communication, preferably, by RFID or Bluetooth technology.

In another preferred embodiment of the recycling management system, the system also comprises a server system in data communication with said tag readers and enabled for producing a register of at least the received data from the tag readers. As the server system is in data communication with the tag readers, it follows that the server system is configured to transmit and to receive information to and from the tag readers and that the tag readers are configured to transmit and to receive information to and from the server system.

In consequence, in this preferred embodiment, the server system registers each detection of each electronic tag that reaches a predetermined distance respect to the tag readers, preferably, the entry and/or exit of the products and/or packages in and/or out of the products' distribution facilities, waste container, means of transportation and/or waste sorting and/or recycling stations. Then, it allows the user to be informed when a product and/or package has entered and/or exited in and/or out of products' distribution facilities, waste container, means of transportation and/or waste sorting and recycling stations.

Preferably, the server system is cloud based.

In another preferred embodiment of the recycling management system, the tag readers comprise a positioning system for determining its spatial location and are configured to transmit it to the server system. Preferably, the positioning system is a GPS locator. In this case, the server system is configured to receive the spatial location and to register said spatial location.

In this preferred embodiment, please note that the server system registers not only when a product and/or package has entered and/or exited in and/or out of products' distribution facilities, waste container, means of transportation and/or waste sorting and recycling stations but also the position of the product and/or package. Then, it allows the user to be informed in which part of the recycling system the product and/or package is placed.

Alternatively, products' distribution facilities, waste containers, means of transportation and/or waste sorting and recycling stations are equipped with sensors configured to obtain some physical parameters, for example: temperature, humidity, presence in the closest area of toxic fumes, toxic gases, abnormally high temperatures, humidity or any other condition that would compromise the safe handling of the product and/or packages, especially when hazardous products are involved. Said sensors are also configured to transmit the corresponding physical parameter to the server system and the server system is configured to receive the physical parameter and to register said physical parameter.

Preferably, waste containers and waste sorting and recycling stations are equipped with sensors configured to obtain the level or volume of waste (how full it is) and to transmit the corresponding information to the server system and the server system is configured to receive the information and to register thereof.

In another preferred embodiment of the recycling management system of the invention, the products and/or packages comprises at least one sensor configured to monitor product condition or package condition.

In this preferred embodiment, the sensor, the electronic tags, the tag readers and/or the server system are able to communicate each other in order to transmit product condition or package condition to the server system and produce its registration. Then, the sensor, the electronic tags, the tag readers and/or the server system are configured to transmit and to receive the product condition and/or package condition information so that the product condition and/or package condition are registered in the server system.

In this preferred embodiment, optionally, the electronic tags integrate the sensor which, preferably, is configured to detect any tampering of the product and/or package by detecting if a product and/or package has been opened before it is available to be used or reaching its final destination or if, for example, the package has been subjected to large temperature fluctuations.

In another preferred embodiment of the recycling management system of the invention, the server system comprises software for computing transport logistics, sorting and recycling strategies according to the registered data of the server system. In consequence, said preferred embodiment allow the user to obtain a route for collecting the products and/or packages from the products' distribution facilities, waste container and/or waste sorting and recycling stations as well as sorting and recycling strategies, preferably, according to the type of waste generated by said products and/or packages (plastic, organic matter, glass, etc.). Preferably, the route is obtained also in order to maximize asset utilization and to reduce fuel costs.

In another preferred embodiment of the recycling management system of the invention, the computing software is provided with artificial intelligence in order to improve transport logistics and recycling strategies according to the registered data of the server system.

In another preferred embodiment of the recycling management system of the invention, the computing software is provided with machine learning algorithms for generating predictions on product and/or packaging waste generation patterns and composition from the received data for optimizing transport logistics and recycling strategies. Said predictions allow the user to know the required sorting effort needed in advance for each collection and plan and implement collection routes that not only collect from full or nearly full containers but also that minimize sorting effort needed reducing substantially sorting costs and increasing efficiency.

In another preferred embodiment of the recycling management system of the invention, the computing software is enabled to generate a transparent and incorruptible digital record.

In another preferred embodiment of the recycling management system of the invention, wherein the digital record is produced by Blockchain technology.

Preferably, if the products and/or packages contains hazardous materials or material with large environmental impact, the computing software is enabled to issue a certificate of correct handling and regulatory compliance.

In another preferred embodiment of the recycling management system of the invention, the server system includes at least a user interface for viewing the data, generating alerts, entering and confirming events, monitoring system key performance indicators and/or managing the computing software.

The object of the present invention is also a recycling management method for products and/or packages, wherein an electronic tag, preferably RFID tag and/or WIFI enabled, is fixed to the products and/or packages and is provided with electronic data, being such data at least an unequivocal electronic identifier of the product or package.

Preferably, the tag readers are located at said products' distribution facilities, waste containers, means of transportation, sorting stations and/or waste recycling stations.

The recycling management method of the invention comprises the following steps:
- detecting each electronic tag that reaches a predetermined distance respect to any of said tag readers;
- unequivocally reading the electronic data of the electronic tags, preferably, with no need of direct line of sight communication;
- transmitting the electronic data to a server system and then to said sorting and recycling means.

In a preferred embodiment, the detection is carried out by tag readers, for example: RFID readers and/or WIFI enabled, and, preferably, located by any mechanical means on or into the products' distribution facilities (preferably, doorways in warehouses), waste container, means of transportation and/or waste sorting and recycling stations (preferably, receiving docks) in order to be able to detect the entry and/or exit of the electronic tags therein and/or therefrom.

Preferably, the tag readers are configured to detect the entry and/or the exit of the electronic tags in and/or out of products' distribution facilities, waste container, means of transportation and/or waste sorting and recycling stations, regardless of the fact that the entry and/or the exit of the packages and/or products is one by one or in batches.

In a preferred embodiment of the recycling management method, the detection and reading are carried out by electronic means without a direct line of sight communications with the electronic tag, preferably, by RFID or Bluetooth technology.

In a preferred embodiment of the recycling management method, said method further comprising the step registering the electronic data read. Preferably, said register of the electronic data is carried out in a server system and/or cloud.

In another preferred embodiment, the server system is in data communication with said tag readers. So, the server system is configured to transmit and to receive information to and from the tag readers and the tag readers are configured to transmit and to receive information to and from the server system.

In consequence, in these preferred embodiments, the server system registers each entry and/or exit of the products and/or packages in and/or out of the products' distribution facilities, waste container, means of transportation and/or waste sorting and recycling stations. Then, it allows the user to be informed when a product and/or package has entered and/or exited in and/or out of products' distribution facilities, waste container, means of transportation and/or waste sorting and recycling stations.

In another preferred embodiment of the recycling management method, said method comprises the following steps:
- Determining the spatial location of the tag readers;
- Transmitting the spatial position;
- Registering the spatial position.

Preferably, said 3 steps are carried out by a positioning system and, more specifically, by GPS locator.

In the preferred embodiment in which the register of the electronic data is carried out by the server system, the register of the spatial location is carried out also by the server system.

In this preferred embodiment, please note that the server system registers not only when a product and/or package has entered and/or exited in and/or out of products' distribution facilities, waste container, means of transportation and/or waste sorting and recycling stations but also the position of the product and/or package. Then, it allows the user to be informed in which part of the recycling process the product and/or package is located.

Alternatively, products' distribution facilities, waste container, means of transportation and/or waste sorting and recycling stations are equipped with sensors configured to obtain some physical parameters, for example: temperature, humidity, presence in the closest area of toxic fumes, toxic gases, abnormally high temperatures, humidity or any other condition that would compromise the safe handling of the product and/or packages, specially hazardous products. Said sensors are also configured to transmit the corresponding physical parameter to the server system and the server system is configured to receive the physical parameter and to register said physical parameter.

Preferably, waste containers and waste sorting and recycling stations are equipped with sensors configured to obtain the level or volume of waste (how full it is) and to transmit the corresponding information to the server system and the server system is configured to receive the information and to register it thereof.

In another preferred embodiment of the recycling management method, said method further comprising the steps:
- Monitoring product condition or package condition;
- Transmitting product condition or package condition;
- Registering product condition or package condition.

Preferably, monitoring product condition or package condition and the corresponding transmission thereof is carried out by a sensor.

In this preferred embodiment, the sensor, the electronic tags, the tag readers and/or the server system are able to communicate each other in order to transmit product condition or package condition to the server system and produce its registration. Then, the sensor, the electronic tags, the tag readers and/or the server system are configured to transmit and to receive the product condition and/or package condition to each other.

In this preferred embodiment, optionally, the electronic tags integrate the sensor which, preferably, is configured to detect any tamper of the product and/or package by detecting if a product and/or package has been opened before it is available to be used or reaching its final destination or if the package has been subjected to large temperature fluctuations or any other abnormal condition.

In another preferred embodiment of the recycling management method, said method comprises the following step: computing optimal transport logistics, sorting and recycling strategies according to registered electronic data. Preferably, said computation is carried out by a computing software configured to be executed in the server system.

In another preferred embodiment of the recycling management method of the invention, the computation is carried out using artificial intelligence in order to improve the transport logistics and recycling strategies.

In another preferred embodiment of the recycling management method of the invention, the machine learning algorithms are based on machine learning algorithms in order to generate predictions on product and/or packaging waste generation patterns and composition and to optimize transport logistics, sorting and recycling strategies.

In another preferred embodiment of the recycling management method of the invention, said method comprise the step: generating a transparent and incorruptible digital record.

Preferably, said transparent and incorruptible digital record is produced by Blockchain technology.

Preferably, if the products and/or packages contains hazardous materials or material with large environmental impact, the computing software is enabled to issue a certificate of correct handling and regulatory compliance.

In another preferred embodiment of the recycling management system of the invention, the server system includes at least a user interface for viewing the data, generating alerts, entering and confirming events, monitoring system key performance indicators and managing the computing software.

Please note that the recycling management system and method allow the user at least the following advantages:
- Improving visibility and traceability, at every step of the recycling process, manufacturing, distribution, discarding, collection, sorting and recycling, specially for hazardous or environmentally sensitive packages or packaging containing substances subject to special regulations. In this regard, the system and the method allow more specifically the user to know:
   ∘ When the product and/or the package leaves the manufacturing facility;
   ∘ When the product and/or the package enters and/or leaves the products' distribution facilities;
   ∘ When the product and/or the package is discarded and begins the collection;
   ∘ When the sorting and/or the recycling process begin.
- Ability to track and monitor at real time and more precisely the product and/or packages
- Ability to know packaging waste volume in containers and their composition so that the collection and the sorting can be optimized.
- Ability to know, for each product and/or package who is the manufacturer as well as who discards and/or who is entrusted with collecting, sorting and recycling said product so that performance and accountability are clearly established along the entire package and/or products' lifecycle.

### Brief description of the drawings

The previous advantages and characteristics, in addition to others, shall be understood more fully in light of the following detailed description of an exemplary embodiment, with reference to the drawing attached, which must be taken by way of illustration and not limitation, wherein:

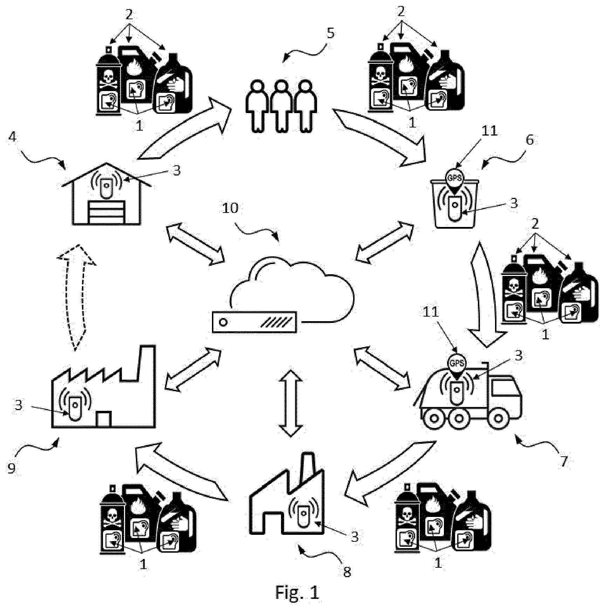

- Fig. 1 represents an exemplary embodiment of the present recycling management system.

### Detailed description of an exemplary embodiment

In view of the mentioned figure and, according to the numbering adopted, one can observe in it an example of a preferred embodiment of the invention, which comprises the parts and elements that are indicated and described in detail below.

As shown in Fig. 1, the preferred embodiment of the present recycling management system is configured to track each product or package from the moment it is manufactured until the final reception at the recycling facility.

The system is firstly comprised by electronic tags (1) already fixed or configured to be fixed to products or packages (2) intended to be recycled. Each electronic tag (1) is provided with electronic data, said data being at least an unequivocal electronic identifier of the single product or package (2).

The system also comprises tag readers (3) already located or enabled to be located at products' distribution facilities (4), waste containers (6), garbage trucks as means of transportation (7), waste sorting stations (8) and recycling facilities (9). These tag readers (3) are configured to detect each electronic tag (1) that reaches a predetermined distance respect to any of these tag readers (3), the distance being selectable for each tag reader (3). The tag readers (3) are also configured to unequivocally read the electronic data of the tags (1) with no need of contact view and transmit it to a cloud based server system (10), which is also comprised in the preferred embodiment of the present recycling management system.

In this preferred embodiment, the tag readers (3) are disposed so that each electronic tag (1) can be tracked at any relevant step of the product's life cycle, for example, but not limited to, when the package is distributed to users (5) from the products' distribution facilities (4), discarded by the users (5) at the waste containers (6), transported by garbage trucks (7) to waste sorting stations (8) and recycled at recycling facilities (9). The present embodiment can also provide with information about which product or package could be reconditioned or even ready to be reused.

The server system (10) is in communication with said tag readers (3) and enabled for producing a registration of the received data from the tag readers (3).

In this preferred embodiment, the tag readers (3) located at the waste containers (6) and the garbage trucks (7) also comprise a positioning system (11) for determining its spatial location and are configured to transmit it to the server system (10) as well.

The preferred recycling management system includes a user interface located at the recycling facilities (9) for viewing the type of recycled waste that is received in each period of time, in order to improve its management.

In this preferred embodiment, the server system comprises computing software provided with artificial intelligence for generating predictions on packaging waste generation patterns and composition from the registered data in said server system. Also, the computing software is enabled to generate a transparent and incorruptible digital record.

## Claims

1. Recycling management system for products and/or packages, wherein said products and/or packages are intended to be dispatched from products' distribution facilities, discarded in waste containers and transferred to waste sorting and recycling stations by means of transportation, the waste sorting stations being provided with sorting means which are configured to receive electronic data, the system comprising:
- electronic tags configured to be fixed to said products or packages, each electronic tag provided with electronic data, said data being at least an unequivocal electronic identifier of the single product or package,
- tag readers enabled to be located at said products' distribution facilities, waste containers, means of transportation and/or waste sorting stations, and being configured to detect each electronic tag that reaches a predetermined distance respect to any of said tag readers, as well as to unequivocally read their electronic data with no need of direct line of sight communication, and transmit it to said sorting means or to a server system.

2. Recycling management system according to claim 1, also comprising a server system in data communication with said tag readers and enabled for producing a register of at least the received data from the tag readers.

3. Recycling management system according to claim 2, wherein one or more tag readers comprise a positioning system for determining its spatial location and are configured to transmit it to the server system.

4. Recycling management system according to one of claims 2 to 3, wherein one or more products or packages comprise at least one sensor configured to monitor product condition or package condition, wherein the sensor, the electronic tags, the tag readers and/or the server system are able to communicate each other in order to register the product condition and/or package condition in the server system.

5. Recycling management system according to one of claims 2 to 4, wherein the server system comprises software for computing transport logistics, sorting and recycling strategies according to the registered data in the server system.

6. Recycling management system according to claim 5, wherein the computing software is provided with artificial intelligence for improving transport logistics and recycling strategies according to the registered data of the server system.

7. Recycling management system according to claim 6, wherein the computing software is provided with machine learning algorithms for generating predictions on product and/or packaging waste generation patterns and composition from the received data for optimizing transport logistics and recycling strategies.

8. Recycling management system according to one of claims 5 to 7, wherein the computing software is enabled to generate a transparent and incorruptible digital record.

9. Recycling management system according to claim 8, wherein the digital record is produced using Blockchain technology.

10. Recycling management method for products and/or packages, wherein said products and/or packages are intended to be dispatched from products' distribution facilities, discarded in waste containers and transferred to waste sorting and recycling stations by means of transportation, the waste sorting stations being provided with sorting means which are configured to receive electronic data, wherein an electronic tag is fixed to the products and/or packages and is provided with electronic data, being at least an unequivocal electronic identifier of the product or package, and wherein tag readers are located at said products' distribution facilities, waste containers, means of transportation, recycling stations and/or waste sorting stations, comprising the method the following steps:
- detecting each electronic tag that reaches a predetermined distance respect to any of said tag readers;
- unequivocally reading their electronic data with no need of direct line of sight communication;
- transmitting the electronic data to said sorting means or to a server system.

11. Recycling management method according to claim 10, further comprising the step:
- Registering the electronic data read

12. Recycling management method according to claim 11, further comprising the steps:
- Determining the spatial location of the tag readers;
- Transmitting the spatial position;
- Registering the spatial position;

13. Recycling management method according to one of claims 11 or 12, further comprising the step:
- Monitoring product condition or package condition;
- Transmitting product condition or package condition;
- Registering product condition or package condition.

14. Recycling management method according to one of the claims 11 to 13, further comprising the step:
- Computing optimal transport logistics and optimal sorting and recycling strategies according to registered electronic data

15. Recycling management method according to one of the claims 17 to 19, further comprising the step:
- Generating a transparent and incorruptible digital record.
